# EUROPÄISCHE PATENTSCHRIFT

(11) **EP 0 689 368 B1**
(45) Veröffentlichungstag und Bekanntmachung des Hinweises auf die Patenterteilung: **14.05.1997**
(21) Anmeldenummer: 94810363.5
(22) Anmeldetag: 20.06.1994
(51) Int. Cl.: H04Q 7/22

(54) **Vorrichtung zur Übermittlung von Meldungen in einem mobilen Kommunikationsnetz**
Message transmission arrangement in a mobile communication system
Dispositif de transmission de messages dans un réseau de communication mobile

(43) Veröffentlichungstag der Anmeldung: 27.12.1995
(73) Patentinhaber: Generaldirektion PTT, 3030 Bern (CH)
(72) Erfinder: Ritter, Rudolf, CH-3052 Zollikofen (CH); Hertel, Joachim, D-63128 Dietzenbach (DE)
(74) Vertreter: Tschudi, Lorenz

(56) Entgegenhaltungen:
- EP-A- 0 555 992
- EP-A- 0 562 890
- WO-A-92/14329
- CH-A- 683 052
- TELECOMMUNICATION JOURNAL OF AUSTRALIA, Bd.43, Nr.2, 1993, AU, SS 33-38; GRIGOROVA ET AL.: 'Sim Cards'

## Beschreibung

Die vorliegende Erfindung betrifft eine Vorrichtung zur Übermittlung von Meldungen in einem Kommunikationsnetz zur Sprach- und Datenverarbeitung mit einer Vielzahl von Endgeräten, welche einem bestimmten Benutzer zugeordnet sind oder mittels einem in das Endgerät einsetzbaren Datenträger einem bestimmten Benutzer zugeordnet werden können, wobei mindestens zwei Endgeräte miteinander in eine Sprach- oder Datenkommunikation treten können, sowie mit mindestens einer Zentrale zum Steuern der Meldungsübermittlung innerhalb dem Kommunikationsnetz, wobei jede Meldungsübermittlung eine Datenkommunikation ist, bei welcher Datentelegramme ausgetauscht werden, in welchen je ein standardisierter Datenvorsatz zum Festlegen der Identität des Teilnehmers und der Authentizität der Meldung enthalten ist, sowie mit mindestens einer im Kommunikationsnetz vorhandenen zentralen Einheit, wobei mindestens ein Teil der Endgeräte und die zentrale Einheit Mittel zum Erzeugen des Datenvorsatzes der Datentelegramme aufweisen, wobei die Datentelegramme entweder von der zentralen Einheit zu mindestens einem der Endgeräte oder von einem der Endgeräte zur zentralen Einheit übermittelt werden, wobei in der zentralen Einheit und in dem genannten mindestens einen Teil der Endgeräte Einrichtungen zum Prüfen des Datenvorsatzes vorhanden sind.

Gegenwärtig bieten viele Länder nationale Mobilfunknetze an, die eine Vielzahl technischer Standards verwenden. Für den grenzüberschreitenden Verkehr bilden die unterschiedlichen Netze jedoch ein Hindernis. Ein Mobilfunkteilnehmer erwartet, dass er sein Endgerät an verschiedenen Orten in mehreren Ländern, beispielsweise in ganz Europa, verwenden kann.

Mit der Einführung des GSM-Standards (Global System for Mobil Communication), Bezeichnung für den Standard eines zellularen Mobilfunknetzes, ist der Weg zum einheitlichen Netz und somit zum grenzüberschreitenden Verkehr frei geworden.

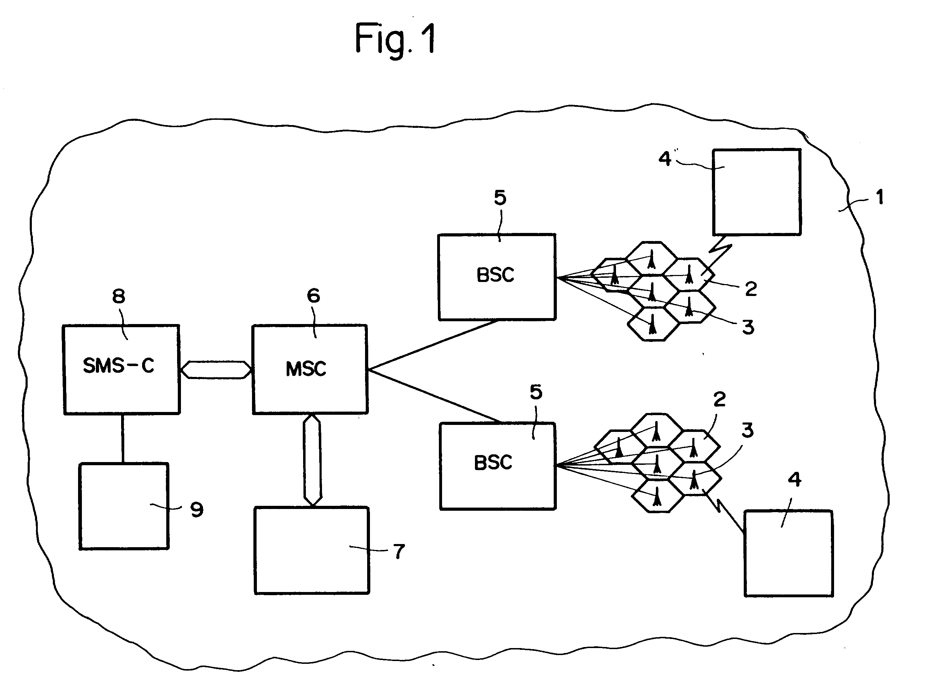

In der Fig. 1 ist der prinzipielle Aufbau eines Mobilfunknetzes, das nach dem GSM-Standard arbeitet, gezeigt. Mit 1 sei darin der flächenmässige Bereich des Mobilfunknetzes bezeichnet. Die ganze Fläche dieses Netzes ist dabei von aneinander angrenzenden und einander überlappenden Funkzellen 2, von denen in der Fig. 1 lediglich einige wenige sichtbar sind, überdeckt. In jeder Funkzelle 2 ist eine Basisstation 3 (RBS, Radio-Base-Station) vorhanden, welche die Funkversorgung zu den Endgeräten bei den Mobilfunkteilnehmern übernehmen. Auf jeder Funkstrecke zwischen einer Basisstation 3 und einem Endgerät 4 werden alle Sprach- und Steuerinformationen sowie andere Daten wie beispielsweise Meldungen digital verschlüsselt übertragen.

Mit 5 ist ein Controller gezeichnet (BSC, Base-Station-Controller), mit dem mehrere Basisstationen gesteuert werden. Beispielsweise ist der Controller dafür verantwortlich, dass der Übergang eines Teilnehmers bzw. des dem Teilnehmer zugeordneten Endgerätes, insbesondere ein Mobilfunktelefon, von einer Funkzelle zu einer anderen benachbarten Funkzelle funktechnisch reibungslos ablaufen kann. Anhand von automatisch durchgeführten Feldstärkemessungen entscheidet der Controller, wann der Übergang von einer Funkzelle zu welcher benachbarten Funkzelle eingeleitet werden soll. Ein derartiger Übergang wird Handover genannt.

Die Controller sind ihrerseits zu einer übergeordneten Mobilfunkzentrale 8 (MSC, Mobil-Service-Switching-Center) zusammengefasst, welche Zentrale den Übergang zu einem drahtgebundenen Netz 7, beispielsweise einem ISDN-Netz (ISDN, Integrated Services Digital Network), also einem digitalen dienstintegrierten Fernmeldenetz, herstellt. Auf einem solchen Fernmeldenetzwerk können beispielsweise gleichzeitig Sprachinformationen, Bildinformationen, Informationen von EDV-Anlagen, etc. übertragen werden.

Mit 9 ist ein weiteres Endgerät, beispielsweise ein Personal Computer (PC), gezeigt, mit welchem unter anderem als Anwendung einer Datenkommunikation Meldungen zu einem Mobilfunktelefon 4 übertragen werden können. Die Möglichkeit, dies zu tun, ist in der Fachwelt unter einem mit SMS (SMS, Short Message Service) benannten Dienst bekannt. Meldungen können jedoch auch von einem Mobilfunktelefon zu einem anderen Mobilfunktelefon übermittelt werden. Die Verbindung wird dabei stets über eine Zentrale für den Kurzmeldungsdienst 8, ein sogenanntes Short Message Service Center 8, (SMS-C) abgewickelt. Der Dienst SMS zur Übermittlung von Kurzmeldungen ist ein Telekommunikationsdienst, der es erlaubt, Nachrichten von dem Short Message Service Center an einen GSM-Teilnehmer zu schicken (SMS MT/PP, Mobile Terminated / Point-to-Point) bzw. diese von einem GSM-Teilnehmer an den Short Message Service Center (SMS MO/PP, Mobile Originated / Point-to-Point) zu übermitteln. Jede Meldung ist dabei in einem Datentelegramm verpackt, welchem ein Datenvorsatz, ein standardisierter Header, vorgespannt ist, in welchem u.a. die Identifikation des Teilnehmers und ein Code, dass es sich hier um eine Meldung handelt, enthalten ist.

Mit GSM Phase 2 ist dieses Vorgehen, das im Standard GSM 3.40 definiert ist, bezeichnet. Es erlaubt, beliebige Bitströme in einem transparenten Modus zu übertragen. Kurzmeldungen wie beispielsweise "Ruf doch bitte den Teilnehmer xyz an" lassen sich damit von einem Teilnehmer A über den Short Message Service Center an einen Teilnehmer B übermitteln. Die Meldung wird beim Empfänger beispielsweise auf einem Display angezeigt.

Ab GSM Phase 2 gibt es auch die sogenannte Klasse 2 Nachrichten. Bei Mobilfunktelefonen oder anderen Endgeräten, die zum Verarbeiten von Klasse 2 Nachrichten vorgesehen sind, wird dabei vorausgesetzt, dass ein Speichermittel vorhanden ist, vorzugsweise ein Teilnehmer-ldentifikations-Modul (SIM, Subscriber Identification Module) in der Ausbildung einer Chipkarte. Im Speichermittel sind unter anderem alle für die Identifikation des Benützers notwendigen Daten enthalten. Chipkarten oder Prozessorchipkarten sind in ein beliebiges zu verwendendes Endgerät einsetzbar. Ein Vorteil einer solchen Ausführung liegt darin, dass beispielsweise ein Mobilfunkteilnehmer nicht sein persönliches Endgerät bei sich tragen muss, sondern lediglich seine Chipkarte.

Die Nachrichten der Klasse 2 oder darauf basierender Weiterentwicklungen, welche aus einer oder mehreren Meldungen bestehen können, werden meldungsweise auf dem vorgenannten Speichermittel abgelegt. Sobald dies geschehen ist, wird eine positive Empfangsbestätigung an den Short Message Service Center gesendet.

Damit bietet sich die Möglichkeit, sowohl Daten als auch ausführbare Instruktionen an ein Speichermittel in einem Endgerät zu senden oder von diesem zu empfangen.

Die Aufgabe der vorliegenden Erfindung war es somit, die vorteilhaften Eigenschaften der Klasse 2 Nachrichten weiter auszubauen und mit dem SMS Dienst nicht lediglich transparente Bitströme zu übermitteln, sondern besondere Dienste an dazu autorisierte Teilnehmer anzubieten.

Erfindungsgemäss ist dies mit einer Vorrichtung zur Übermittlung von Meldungen in einem Kommunikationsnetz zur Sprach- und Datenverarbeitung gelöst worden, die sich dazu auszeichnet, dass die Datentelegramme einen vom jeweiligen Netzwerkbetreiber festlegbaren Kennungscode enthalten, dass die zentrale Einheit und der genannte mindestens eine Teil der Endgeräte Mittel zum Erzeugen des Kennungscodes aufweisen und Filter zum Erkennen des Kennungscodes umfassen, wobei der Kennungscode eine vom jeweiligen Netzwerkbetreiber festlegbare Sicherheitseinrichtung für die Übermittlung bestimmter Meldungen ist und im Datentelegramm unmittelbar anschliessend an den standardisierten Datenvorsatz enthalten ist.

Die europäische Patentanmeldung EP 0 562 890 umfasst ein Mobiltelefonnetz gemäss dem GSM-Standard, Endgeräte mit SIM-Modulen und ein Short-Message-Service-Center. Es ist vorgesehen, die SIM-Module ab dem Short-Message-Service-Center zu updaten, d.h. bestimmte Speicherplätze im SIM-Modul zu überschreiben. In den SIM-Modulen ist dabei ein Filter vorgesehen, mit dem gewöhnliche Kurzmeldungen von Meldungen mit Update-Informationen unterschieden werden können. Updating-Meldungen geht eine erste Meldung (first command, verifying command) voraus, in welcher ein Berechtigungscode vorhanden ist, der mit einem Code aus dem SIM-Modul verglichen wird. Nachfolgende Meldungen, die Update-Informationen enthalten, sind nur noch als Remote SIM Updating Message (RSU) gekennzeichnet. Eine eigentliche Verschlüsselung ist im Dokument nicht aufgeführt. Es ist ebenfalls auch nicht erwähnt, dass die einzelnen Meldungen in einer beliebigen Reihenfolge beim Endgerät eintreffen können. Im genannten Dokument ist nur eine Datenkommunikation in einer Richtung beschrieben (Mobil Terminating SMS).

Mit dem erfindungsgemässen Kennungscode, der zusätzlich zum standardisierten Datenvorsatz oder Header in einem Datentelegramm einer Meldung vorhanden sein kann, wird gekennzeichnet, dass die in dieser Meldung vorhandenen Daten Daten sind, die nach einer speziellen Prozedur zu verarbeiten sind. Der Kennungscode, der vorteilhafterweise anschliessend an den standardisierten Datenvorsatz oder Header vorhanden ist, wird entweder von einer zentralen Einheit oder von Endgeräten, die dazu ausgerüstet sind, erzeugt und zusammen mit dem Datentelegramm der Gegenstelle, entweder dem Endgerät oder der zentralen Einheit, übermittelt. Sowohl die zentrale Einheit als auch Endgeräte, die dazu ausgerüstet sind, prüfen beim Empfang eines jeden Datentelegrammes, welches am standardisierten Datenvorsatz erkennbar ist, ob die Meldung zusätzlich einen Kennungscode enthält. Ist dies nicht der Fall, werden die Daten des Datentelegrammes als normale, bisher übliche Meldung gemäss SMS-Standard behandelt. Ist dies der Fall, weiss die zentrale Einheit, dass der Absender des Telegrammes Informationen sendet, die einem besonderen, sonst nicht zugänglichen Dienst oder einer besonderen Anwendung zuzuordnen sind. Ebenfalls weiss in diesem Falle das Endgerät, dass die im Telegramm mit einem erkannten Kennungscode vorhandenen Daten Daten zum Bearbeiten und/oder Anzeigen von Informationen eines bestimmten vorgängig angewählten besonderen Dienstes umfassen. Mit dem Kennungscode ausgerüstete Datentelegramme ermöglichen, Daten und ausführbare Instruktionen an speziell mit einem Filter zum Erkennen solcher Datentelegramme ausgerüstete Endgeräte zu übertragen bzw. von solchen Endgeräten in der zentralen Einheit, die ebenfalls ein entsprechendes Filter umfasst, zu empfangen. Davon ausgehend lässt sich zwischen den entsprechend ausgerüsteten Endgeräten und der zentralen Einheit, welche eine steuernde Zentrale, ein sogenannter Service Center ist, ein Anwendungsprotokoll definieren, das für das angesteuerte Endgerät die Nachrichtensynchronisation, Datenauthentizität mittels Kryptogramm und Generierung einer ausführbaren Instruktion regelt. Auf der Basis des Anwendungsprotokolls können neue vom Netzbetreiber dem entsprechenden Teilnehmer offerierte Dienste definiert werden, die sich als Nachrichtenaustausch zwischen einem mit einem entsprechenden Filter versehenen Endgerät und dem Service Center verstehen lassen. Als Beispiel eines solchen besonderen Dienstes ist es beispielsweise möglich, ortsabhängige Abfragen durchzuführen. So kann unter anderem ermöglicht werden, ortsabhängige Telefonnummern von Hilfediensten, wie Pannendienst, Arzt, Apotheke etc., abzufragen.

Der Kennungscode kann vom Netzbetreiber festgelegt werden. Er braucht auf keine internationalen Standards abgestimmt zu sein und er kann beliebig entwickelte Sicherheitseinrichtungen umfassen, derart, dass eine zufällige Inanspruchnahme von besonderen Diensten durch nicht berechtigte Teilnehmer ausgeschlossen werden kann. Das Filter ist zweckmässigerweise als Softwaremodul aufgebaut. Dieses Softwaremodul muss zur Zeit des Festlegens der Initialdaten in einem Endgerät, welches einem Teilnehmer fest zugeordnet wird oder auf einem Datenträger, vorzugsweise auf einer Chipkarte, welcher einem Teilnehmer fest zugeordnet wird und in einer Vielzahl von nicht zugeordneten Endgeräten einsetzbar ist, gespeichert werden.

Da das genannte Kommunikationsnetz, in dem die Vorrichtung zur Anwendung gelangt, vorzugsweise ein digital arbeitendes Kommunikationsnetz ist, insbesondere jedoch ein zellular aufgebautes Mobilfunknetz, das nach dem GSM Standard oder dem DCS 1800 Standard definiert ist, sind als Endgeräte überwiegenderweise Mobilfunktelefone vorgesehen. Diese sind zunehmend derart ausgerüstet, dass sie eine Schreib-Lese-Vorrichtung für eine Chipkarte, insbesondere für Prozessorchipkarten (SIM Subscriber-Identification-Modul) enthalten. Ein Endgerät könnte aber auch ein Datenverarbeitungsgerät, wie beispielsweise ein Personalcomputer oder ein Handheldcomputer sein. Es wäre aber ebenfalls denkbar, dass solche Geräte, obschon bis heute noch nicht üblich, in Zukunft ebenfalls eine Datenschreib-Lese-Vorrichtung für Chipkarten aufweisen könnten. Benutzerspezifische EDV-Daten sind ja bereits heute mittels mobilen Datenträgern wie Disketten, Festplatten oder Speichermittel, nach dem PCMCIA-Standard in Chipkartengrösse an verschiedenen EDV-Geräten einsetzbar.

Flussdiagrammässig stellt das genannte Filter eine Verzweigungseinrichtung dar, welche Meldungen, die den Kennungscode nicht enthalten, an einen ersten Ausgang weitergibt und welche Meldungen, in denen der Erkennungscode erkannt wird, an einen zweiten Ausgang führt. Dieser vorzugsweise softwaremässig auf der Chipkarte aufgebaute Filter wird stets angesprochen, wenn das Endgerät, insbesondere das Mobilfunkgerät, die Chipkarte mit dem Update "SMS Kommando" anspricht, d.h., wenn eine Meldung oder Kurznachricht auf der Chipkarte gespeichert werden soll. Meldungen, die aufgrund des korrekten Kennungscodes an den zweiten Ausgang geleitet werden, werden anschliessend auf korrekte Meldungs- bzw. Nachrichtensynchronisation überprüft. Falls diese nicht gegeben ist, wird die Meldung nicht akzeptiert. Falls die Meldungssynchronisation korrekt ist, wird die Meldung dahingehend überprüft, ob es sich um eine Teilnachricht oder um eine vollständige Einzelnachricht handelt.

Das Filter kann irgend eine Einrichtung sein, die geeignet ist, Datentelegramme, die den Kennungscode enthalten, zu erkennen und/oder auszuscheiden.

Erfindungsgemäss ist vorgeschlagen, dass im Kennungscode die Anzahl Teilnachrichten für eine vollständige Nachricht und eine Information für die Stellung der entsprechenden Teilnachricht innerhalb der Nachricht enthalten sind. Im Speichermittel der Chipkarte werden die einzelnen Meldungen in der Reihenfolge ihres Eintreffens mindestens so lange gespeichert, bis die vollständige Nachricht empfangen worden ist. Erst dann wird mit der Abarbeitung, und zwar in der richtigen Reihenfolge der einzelnen Meldungen, welche Reihenfolge nicht der Empfangsreihenfolge entsprechen muss, begonnen. Zentralenseitig ist vorgesehen, dass die zentrale Einheit für die besonderen Dienste eine Betriebszentrale umfassen, einen sogenannten SIM Service Center (SSC). Diesem SIM Service Center kann für jeden besonderen Dienst ein Logikmodul (SVL, Servicelogic) zugeordnet sein. Die einzelnen Logikmodule sind mit dem SIM Service Center funktionsmässig verbunden. Dem SIM Service Center ist im weiteren eine Datenbank zugeordnet, die unter anderem zum Verwalten von Berechtigungsdaten der Teilnehmer, die zum Übermitteln von Meldungen mit Kennungscode berechtigt sind, bestimmt ist. Eine Authentizitätskontrolleinheit (AUC, Authentification Center) ist ebenfalls funktionsmässig mit dem SIM Service Center verbunden. Dies ist ein Modul zum Berechnen, Verschlüsseln und Kontrollieren von einem im Kennungscode enthaltenen Sicherheitscode, dem Kryptogramm.

Auf die Art und Weise, wie der Sicherheitscode gebildet ist, wird weiter hinten eingegangen. Vorweggenommen sei lediglich, dass in diesen eine Zufallszahl mit einbezogen ist, wobei die Zufallszahl selbst, vorzugsweise eine durch den Betreiber des Kommunikationsnetzes definierbare Funktion der Meldung ist.

Im folgenden ist die Erfindung anhand von Figuren beispielsweise näher beschrieben. Es zeigen
Fig. 1 den prinzipiellen Aufbau eines nach dem GSM-Standard arbeitenden Mobilfunknetzes gemäss dem Stand der Technik,
Fig. 2 ein erfindungsgemäss erweitertes nach dem GSM-Standard arbeitendes Mobilfunknetz,
Fig. 3 ein Mobilfunktelefon mit einer Chipkarte für ein Mobilfunknetz gemäss den Fig. 1 und 2,
Fig. 4 ein erstes Flussdiagramm, das die Funktion des erfindungsgemässen Filters zeigt,
Fig. 5 ein zweites Flussdiagramm, aus dem die prinzipielle Arbeitsweise des Filters ersichtbar ist,
Fig. 6 den Aufbau eines Datentelegrammes einer Meldung SMS gemäss dem GSM-Standard,
Fig. 7 den Aufbau eines Datentelegrammes einer Meldung mit einem Kennungscode für besondere Dienste, und
Fig. 8 das Mobilfunknetz gemäss der Fig. 2, anders dargestellt, zum Erklären des Vorganges einer Nachrichtenübermittlung.

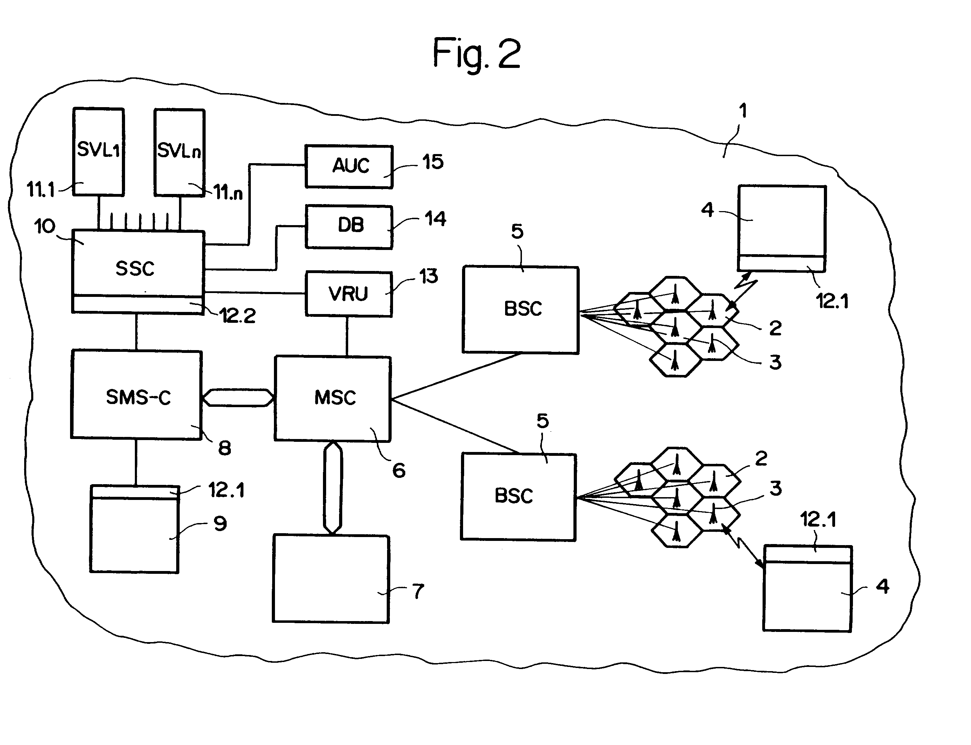

Ausgehend von einem vorzugsweise digital arbeitenden zellular aufgebauten Mobilfunknetz gemäss der Fig. 1, das nach dem GSM-Standard oder nach dem DCS 1800 Standard definiert ist, umfasst die erfindungsgemässe Vorrichtung zur Übermittlung von Meldungen, die in der Fig. 2 aufgeführten Netzerweiterungen.

Zum Senden und Empfangen von Meldungen, die in ihrem Datentelegramm den erfindungsgemässen Kennungscode enthalten, sind die dazu vorgesehenen Endgeräte 4, 9 mit einem Filter 12.1 ausgerüstet. Dieser Filter ist vorzugsweise ein Softwaremodul und entweder in einem Speicher im Endgerät selbst oder vorzugsweise auf einer Chipkarte enthalten, welche letztere in eine Schreib-Lese-Vorrichtung, welche am Endgerät 4 angeordnet ist, eingeführt werden kann.

Der Short Message Service Center (SMS-C) 8 leitet von Endgeräten 4, 9 übermittelte Datentelegramme an eine Betriebszentrale für besondere Dienste (SSC, SIM Service Center) 10 weiter. Dieser Betriebszentrale ist ebenfalls ein Filter 12.2 zugeordnet, welches Datentelegramme ohne Kennungscode unmittelbar zum Short Message Service Center 8 zurückführt und lediglich solche mit einem Kennungscode weiterverarbeitet. Der Betriebszentrale ist vorzugsweise für jeden besonderen Dienst, wofür in der Beschreibungseinleitung ein Beispiel bereits kurz genannt ist, ein Logikmodul (SVL 1, SVL n, Service Logic) 11.1 bis 11.n zugeordnet. Mit 11.1 ist dabei das Logikmodul für einen ersten besonderen Dienst oder eine erste Anwendung und mit 11.n ein Logikmodul für einen n-ten besonderen Dienst oder eine n-te Anwendung bezeichnet. Die Anzahl der besonderen Dienste oder Anwendungen ist nicht beschränkt und im wesentlichen von der Kreativität des Netzbetreibers abhängig.

Der SIM Service Center 10 arbeitet zusammen mit Modulen 14, 15 zum Verwalten von Berechtigungsdaten einzelner Teilnehmer, die zum Übermitteln von Meldungen mit Kennungscode berechtigt sind, sowie zum Berechnen, Verschlüsseln und Kontrollieren von einem im Kennungscode enthaltenen Sicherheitscode. Das erste dieser Module ist im wesentlichen eine Datenbank 14, in welcher Teilnehmeridentifikationsdaten von Teilnehmern, die zum Benutzen der besonderen Dienste berechtigt sind, abgelegt sind. Im zweiten Modul 15, dem Authentification Center, wird insbesondere ein im Kennungscode enthaltener Sicherheitscode bei empfangenen Meldungen kontrolliert bzw. bei zu übermittelnden Meldungen berechnet und verschlüsselt. Ein Beispiel dazu ist weiter hinten aufgeführt.

Vorteilhafterweise ist dem SIM Service Center 10 ebenfalls eine Einheit für eine gesprochene Antwort VRU (Voice Respond Unit) 13 zugeordnet, die insbesondere einem Teilnehmer, der einen besonderen Dienst anfordert, mit gesprochenen Mitteilungen eine Unterstützung zum Zugreifen auf den gewünschten besonderen Dienst gewährt. In besonderen Fällen kann die VRU auch ein Help Desk sein, bei dem der gesprochene Text persönlich erfolgt.

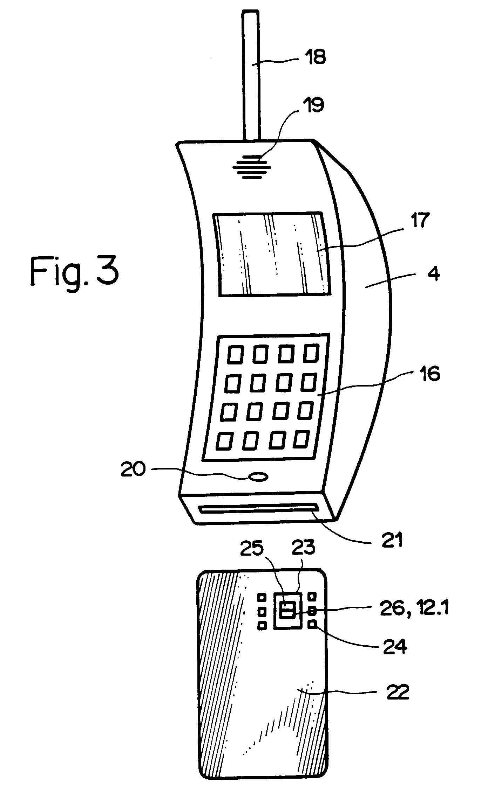

Ein Mobilfunktelefon, wie es bei einer erfindungsgemässen Meldungsübermittlungsvorrichtung gemäss dem Ausführungsbeispiel üblicherweise verwendet wird, ist in der Fig. 3 dargestellt. Das Mobilfunktelefon umfasst dabei ein Bedienungsfeld bzw. eine Tastatur 16, ein Anzeigefeld, insbesondere in der Form einer LC-Anzeige 17, eine Antenne 18, eine Höreröffnung 19, hinter welcher ein Hörer zum Ausgeben einer Sprachkommunikation angeordnet ist, sowie eine Mikrophonöffnung 20, durch welche akustische Signale, die zu übermitteln sind, einem Mikrophon zugeführt wird. Am Mobilfunktelefon 4 ist ebenfalls eine Öffnung 21 zum Einführen einer Chipkarte vorgesehen. Innerhalb der Öffnung oder dem Schlitz 21 ist eine Schreib-Lese-Vorrichtung vorhanden, über welche ein Datenaustausch zwischen dem Endgerät und einer Chipkarte 22 erfolgen kann. Die Chipkarte 22 benötigt zum Arbeiten mit den besonderen Diensten mindestens einen Speicher von 8 Kilobytes EEPROM, welcher Speicher auf dem Chip 23 enthalten und in der Figur nicht näher dargestellt ist. Der Chip 23 ist über ein Kontaktfeld 24, welches aus mehreren einzelnen elektrischen Kontakten besteht, mit der im Mobilfunktelefon angeordneten Schreib-Lese-Vorrichtung elektrisch verbindbar. Auf dem Chip 23 ist mit dem Bezugszeichen 25 ein Speicherbereich gekennzeichnet, welcher ein Chipkartenbetriebssystem (COS Card Operating System) umfasst. Mit 26 ist derjenige Speicherbereich bezeichnet, in welchem das erfindungsgemässe Filter 12.1 abgelegt ist. Weitere Speicherbereiche, insbesondere zum temporären Speichern von mehreren Meldungen einer vollständigen Nachricht sind ebenfalls vorhanden, in den Figuren jedoch nicht speziell ersichtlich.

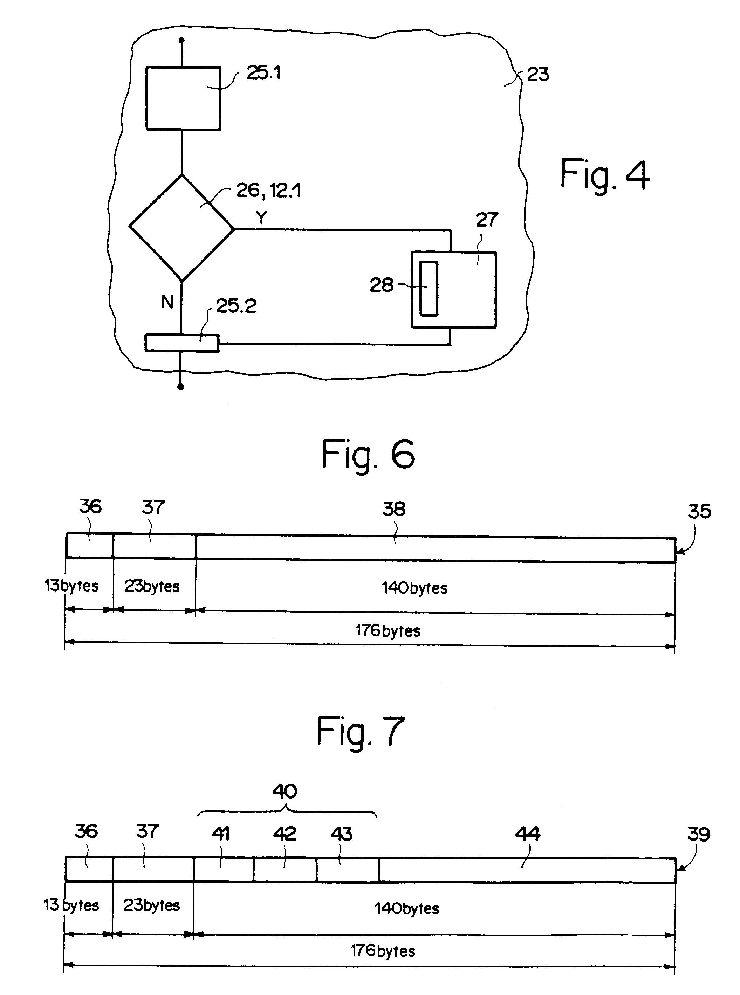

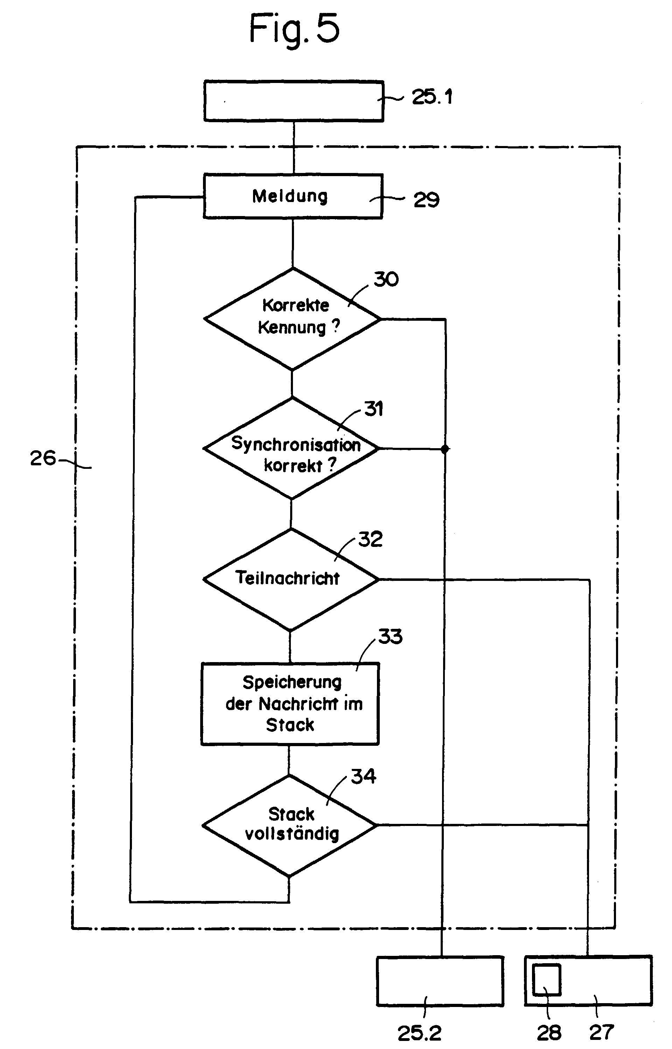

Wie das erfindungsgemässe Filter 12.1 zum Erkennen des Kennungscodes funktionsmässig ausgeführt und in das Betriebssystem auf dem Chip 23 einer Chipkarte eingefügt sein kann, geht aus den Fig. 4 und 5 hervor. Das Chipkartenbetriebssystem 25 ist dabei aufgeteilt in einen ersten Teil 25.1, welcher aus einem Informationsfluss, der zum Endgerät gelangt, insbesondere erkennt, ob darin ein Datentelegramm mit dem standardisierten Datenvorsatz oder Header vorhanden ist, der gemäss GSM 4.08 bzw. GSM 3.40 definiert ist. Falls eine solche Short Message erkannt wird, sorgt der erste Teil des Betriebssystemes 25.1 dafür, dass das entsprechende Datentelegramm abgefangen wird. Mit dem erfindungsgemässen Filter 12.1 wird nun jedes erkannte Datentelegramm nach dem Vorhandensein des Kennungscodes 12.1 abgefragt. Wie bereits gesagt, stellt das Filter eine sorftwaremässige Verzweigungsschaltung mit einem Eingang und zwei Ausgängen dar, wobei Datentelegramme, die den Kennungscode nicht enthalten, direkt einem ersten Ausgang zugeführt werden, welcher mit dem Block 25.2, einem zweiten Teil des Betriebssystemes verbunden ist. Ein solches Datentelegramm wird nun gemäss dem Stand der Technik auf der Chipkarte gespeichert. Dies geschieht üblicherweise anhand von Instruktionen, die beispielsweise im zweiten Teil 25.2 des Betriebssystemes enthalten sein können. Falls das Filter einen Kennungscode erkennt, wird die entsprechende Meldung über einen zweiten Ausgang einem Modul 27 zum Abarbeiten eines besonderen Dienstes zugeführt. Im Kennungscode ist unter anderem eine Information enthalten, welche eine Aussage darüber macht, ob es sich bei der empfangenen Meldung um eine Einzelnachricht handelt, oder ob weitere Meldungen folgen, bis eine vollständige Nachricht übermittelt ist. In jedem Fall wird dem Endgerät mitgeteilt, die wievielte Meldung der Nachricht soeben empfangen worden ist. Dies ist erforderlich, da die Meldungen innerhalb dem Kommunikationsnetz nach gewissen Prioritätskriterien übertragen werden, auf die hier nicht näher eingegangen werden soll, und die dafür verantwortlich sind, dass mehrere Meldungen einer Nachricht in irgend einer Reihenfolge beim Empfangsgerät eintreffen können, welche Reihenfolge nicht unbedingt der richtigen Reihenfolge entsprechen muss. Damit dadurch keine Schwierigkeiten entstehen, ist ein Speicherbereich oder Stack 28 auf dem Chip vorgesehen, auf welchem sämtliche Meldungen einer Nachricht abgespeichert werden, bis die gesamte Nachricht übermittelt worden ist. Erst danach wird mit der Abarbeitung der Nachricht begonnen. Bei einer Nachricht, die aus einer einzigen Meldung besteht, erfolgt selbstverständlich das Abarbeiten sofort.

In der Fig. 5 ist ein weiteres Flussdiagramm gezeigt, aus welchem die prinzipielle Arbeitsweise des erfindungsgemässen Filters ersichtlich ist. Sobald gemäss dem GSM Standard ein Datentelegramm als Meldung festgestellt worden ist (Block 29), wird in einem ersten Abfrageblock 30 geprüft, ob im Datentelegramm ein korrekter Kennungscode enthalten ist. Falls dies nicht zutrifft, wird die Meldung an den ersten Ausgang des Filters zum Block 25.2 weitergegeben. Bei Korrekterkennung, was durch erneutes Berechnen des einleitend bereits erwähnten Kryptogrammes und Vergleich mit dem übermittelten Kryptogramm durchgeführt wird, wird in einem zweiten Abfrageblock 31 im weiteren geprüft, ob die Synchronisation korrekt ist. Auf diese wie auf das Kryptogramm wird weiter hinten noch näher eingegangen. Bei unkorrekter Synchronisation wird das Datentelegramm direkt über den ersten Ausgang dem Block 25.2 übergeben. Bei korrekter Synchronisation wird in einem dritten Abfrageblock 32 festgestellt, ob die soeben empfangene Meldung eine vollständige Nachricht ist oder ob es sich lediglich um eine Teilnachricht handelt. Wie dies festgestellt wird, ist ebenfalls weiter hinten beschrieben. Handelt es sich bei der empfangenen Meldung um eine vollständige Nachricht, wird diese direkt dem Modul 27 zum unmittelbaren Abarbeiten zugeführt. Wird hingegen festgestellt, dass eine Meldung lediglich ein Teil einer Nachricht ist, so kann aus den vorgenannten Gründen eine Abarbeitung nicht erfolgen, solange nicht die ganze Nachricht vorhanden ist. In diesem Fall wird die Teilnachricht im dazu vorgesehenen Stack 28 mindestens so lange abgespeichert, bis alle Teilnachrichten vorhanden sind und mit der Abarbeitung begonnen werden kann. Dies wird im Entscheidungsblock 34 überwacht.

Das Filter 12.2, das vorzugsweise ebenfalls ein Softwaremodul ist und in einem der Betriebszentrale für besondere Dienste (SSC) vorhandenen Speicherbereich abgelegt ist, entspricht funktionsmässig dem soeben beschriebenen Filter.

Ein Datentelegramm zum Übermitteln einer Kurzmeldung mit dem standardisierten Short Message Service (SMS) ist in der Fig. 6 dargestellt. Das Datentelegramm 35 ist gemäss dem GSM Standard mit einer Länge von 176 Bytes definiert. Es umfasst einen Datenvorsatz oder Header 36, 37, welcher einen ersten Block 36 von 13 Bytes Länge umfasst, in welchem Teilnehmeradressdaten enthalten sind, die, wie bereits gesagt, gemäss dem GSM Standard 4.08 definiert sind. An den genannten ersten Block anschliessend ist im Header ein zweiter Block 37 vorhanden, welcher eine Länge von 23 Bytes aufweist und in welchem Short-Message-Service- spezifische Daten, die gemäss dem GSM Standard 3.40 definiert sind, enthalten sind. Auf die einzelnen Blöcke soll in diesem Zusammenhang nicht weiter eingegangen werden, da die entsprechenden Informationen den genannten Publikationen entnommen werden können.

Anschliessend an den Datenvorsatz sind in einem standardgemässen Datentelegramm 140 Bytes vorhanden, die im wesentlichen die Meldungsinformationen beinhalten.

In der Fig. 7 ist im Gegensatz zum soeben beschriebenen Datentelegramm ein Datentelegramm 39 dargestellt, das den erfindungsgemässen Kenncode 40, genannt Transport-Protocol-Data-Unit (TP-DU), umfasst. Das Datentelegramm ist gemäss dem GSM Standard ebenfalls 176 Bytes lang und schliesst den gleichen, aus den Blöcken 36, 37 bestehenden Datenvorsatz oder Header ein. Vorzugsweise anschliessend daran ist der Kennungscode 40 enthalten. Dieser ist wiederum aus mehreren Blöcken 41, 42, 43 aufgebaut. Diese für einen fehlerfreien Informationsfluss für Nachrichten, die besonderen Diensten zugeordnet sind, notwendigen Blöcke umfassen einen mit 41 gekennzeichneten ersten Block mit Angaben über die Anzahl Meldungen für eine vollständige Nachricht, Angaben über die Stellung der entsprechenden Meldung in der vollständigen Nachricht, sowie Angaben der ab einem Zeitpunkt t0 total übermittelten Anzahl Meldungen. Der Block 42 umfasst Daten über die Synchronisation der Nachrichten, auf welche weiter hinten noch näher eingegangen wird. Das gleiche gilt für den Block 43, in welchem aus den Daten des Blockes 42 sowie aus geheimen Daten, die sowohl auf der Sendeseite wie auf der Empfangsseite gespeichert sind, ein errechneter Sicherheitscode abgelegt ist. Beim Mobilfunkgerät sind die geheimen Daten auf der Chipkarte enthalten und beim SIM Service Center in der diesem zugeordneten Datenbank. Weitere Informationen dazu sind ebenfalls nachfolgend anhand der Erklärung des Vorganges einer Nachrichtenübermittlung beschrieben.

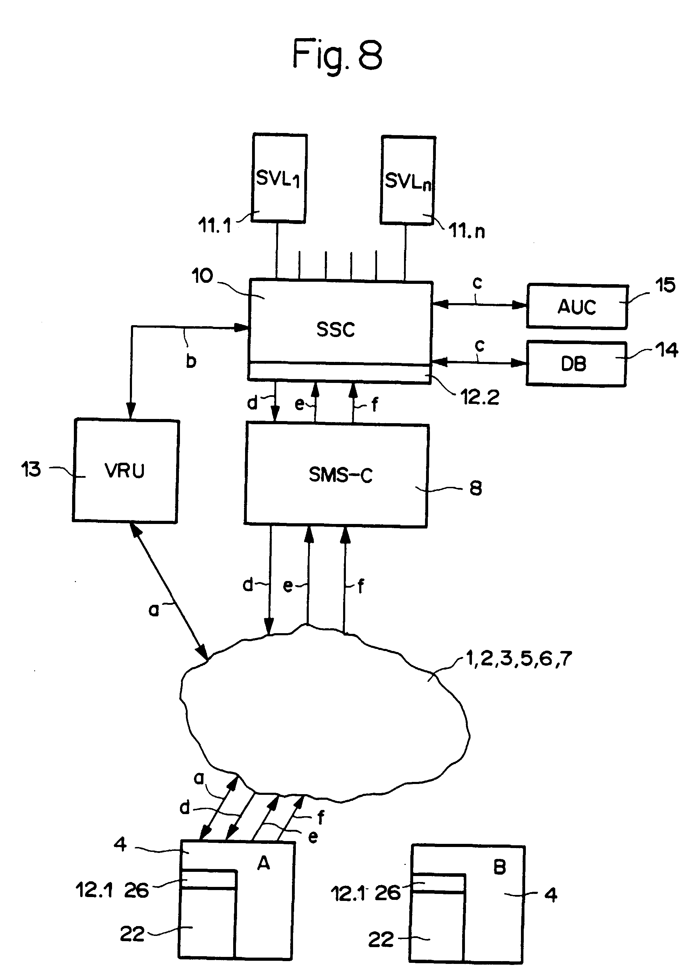

Ein solcher Vorgang einer Nachrichtenübermittlung ist aus der Fig. 8 ersichtlich. Dort ist das Mobilfunknetz gemäss der Fig. 2 in einer Darstellung gezeichnet, die sich zum Erklären des obengenannten Vorganges besser eignet. In der gewählten Darstellung sind die Funkzellen 2, die Basisstationen 3 die Controller für mehrere Basisstationen 5, die Mobilfunktzentrale 6 sowie ein damit in Verbindung stehendes drahtgebundenes Telefonnetz 7 in einem einzigen Feld zusammengefasst. Ausserhalb dieses Feldes sind zwei Endgeräte, insbesondere Mobilfunktelefone 4 mit je einer Chipkarte 22 gezeichnet. Die beiden Mobilfunktelefone 4 seien einem Teilnehmer A und einem Teilnehmer B zugeordnet. Ebenfalls ausserhalb des gemeinsamen Feldes ist die Zentrale für den Kurzmeldungsdienst SMS-C, (Short Message Service-Center) 8 gezeichnet. Funktionsmässig an das Short Message Service Center 8 angeschlossen ist erfindungsgemäss die Betriebszentrale für die besonderen Dienste (SSC, SIM Service Center) 10 mit dem Filter 12.2. Der Betriebszentrale zugeordnet sind, wie bereits gesagt, die Service Logic Module 11.1 bis 11.n je eines für einen besonderen Dienst. In der Fig. 8 ebenfalls ausserhalb des gemeinsamen Feldes sichtbar sind die beiden Module 14 und 15 bzw. das Datenbankmodul 14 und die Authentizitätskontrolleinheit 15. Im weiteren ist die Einheit für eine gesprochene Antwort oder Voice Respond Unit (VRU) 13 sichtbar.

Der Teilnehmer A, der seine persönliche Chipkarte 22 in ein Mobilfunkgerät 4 eingeführt hat und durch diese Chipkarte gekennzeichnet und identifiziert ist, ruft mit den Tasten auf seinem Bedienungsfeld eine Servicenummer an. Dies kann beispielsweise eine gebührenfreie Telefonnummer sein. Dieser Anruf a gelangt über die nicht dargestellte Mobilfunkzentrale zur Voice Respond Unit 13. Diese fordert den Teilnehmer A mittels einer Sprachansage auf, einen Dienst auszuwählen.

Nach erfolgter Dienstauswahl, welche wiederum mit den Tasten des Bedienungsfeldes vom Teilnehmer A erfolgt, signalisiert die Voice Respond Unit 13 dem SIM Service Center 10, dass der Teilnehmer A beispielsweise den Dienst SVL 1 ausgewählt hat. Dabei kann die Voice Respond Unit 13 entweder die Rufnummer des rufenden Teilnehmers automatisch ermitteln (Calling Number Identification) oder diese wiederum über eine Sprachausgabe beim rufenden Teilnehmer erfragen. Dieser Informationsfluss ist in der Figur mit a, b bezeichnet.

Das SIM Service Center 10 prüft nun anhand der Datenbank 14, ob der Kunde bekannt und für den Dienst SVL 1 berechtigt ist. Wenn nein, wird beispielsweise die Anfrage durch eine entsprechende Ansage der Voice Respond Unit zurückgewiesen. Wenn ja, wird die erste Nachricht für den gewünschten Dienst SVL1 gebildet, und mittels Aufruf des Authentification Centers 14 ein Sicherheitscode, das Kryptogramm gebildet. Die Bildung eines solchen Kryptogrammes oder eines nach bestimmten Regeln verschlüsselten Wortes kann beispielsweise nach dem bekannten DES-Standard erfolgen.

Dieser gehorcht beispielsweise einer Gleichung
SRES = A3 (ki, RAND).

Darin bedeuten:
SRES Signed Responds / Nachrichtenantwort,
A3 geheimer Algorhythmus, der sowohl im Authentification Center 15 als auch auf der Chipkarte 22 gespeichert ist,
ki geheimer Schlüssel, der ebenfalls sowohl im Authentification Center 15 als auch auf der Karte 22 des entsprechenden Teilnehmers vorhanden ist,
RAND Random / Zufallszahl oder Prüfsumme, die beispielsweise aus dem Inhalt der ersten Nachricht erfindungsgemäss wie folgt gewonnen wird:
RAND = f (Nachricht).

Die Funktion, nach welcher die Zufallszahl oder Prüfsumme aus der Nachricht gewonnen werden soll, kann beispielsweise vom Teilnehmer selbst anlässlich einer Identifikationsprozedur beim erstmaligen Einsatz der Chipkarte, auf welche Prozedur aber hier nicht näher eingegangen werden soll, festgelegt werden. Es kann irgend eine mathematische Funktion sein, die irgendwie beispielsweise mit der Länge der Nachricht verknüpft wird. Die Zufallszahl oder Prüfsumme RAND, oder die Funktion nach welcher diese Zahl berechnet werden soll, sind auf der Chipkarte 22 und im Authentification Center 15 gespeichert und werden jeweils an Ort berechnet.

Das gemäss den genannten Formeln berechnete Kryptogramm SRES wird im Block 43 des Kennungscodes 40 im Datentelegramm für die erste Meldung abgelegt. Über die Datenbank 14 wird der aktuelle Synchronisationszähler für die Chipkarte 22 des Teilnehmers A festgestellt. Der Inhalt des Synchronisationszählers ist ebenfalls Teil des Kennungscodes und wird im Block 42 abgelegt. In den Block 41 des Kennungscodes wird eingeschrieben wieviele Meldungen die angeforderte und an den Teilnehmer A zu übermittelnde Nachricht umfasst und welche Meldung innerhalb einer Meldungsfolge soeben aufbereitet wird. Diese Vorgänge sind in der Fig. 8 mit dem Buchstaben c bezeichnet.

Das SIM Service Center 10 schickt nun die auf diese Weise aufbereitete Nachricht, die aus einer oder mehreren Meldungen bzw. Datentelegrammen bestehen kann, an den Teilnehmer A bzw. an dessen Chipkarte 22, die in einem Endgerät 4 eingesteckt ist. Alle Nachrichten werden dabei, wie eingangs genannt, als GSM Klasse 2 Nachrichten verschickt. Das Verschicken einer solchen Nachricht ist mit dem Buchstaben d gekennzeichnet. Sobald eine Nachricht, die die Prüfkriterien des Filters auf der Chipkarte durchlaufen hat, auf der Chipkarte des Teilnehmers A gespeichert ist, wird durch diese eine positive Rückantwort, die mit e bezeichnet ist, generiert und dem SIM Service Center zurückgesandt.

Gemäss dem GSM Standard werden alle Nachrichten über ein Short Message Center (SMS-C) 8 sowohl gesendet als auch empfangen.

Der erfindungsgemässe Filter 12.1, der in einem Speicherbereich auf der Chipkarte 22 des Teilnehmers A enthalten ist, erkennt die eingehenden Nachrichten, sammelt Teilnachrichten im Chipkartenstack 28 und führt die Kartenanwendung dann aus, wenn alle Teilnachrichten eingetroffen sind. Dies kann anhand des Blockes 41 aus dem Kennungscode 40 ermittelt werden.

Die Karte kann z.B. als Resultat der empfangenen Nachrichten neue, abgehende Nachrichten generieren und diese als Kurzmeldungen SMS MO-PP, (siehe unterster Abschnitt, Seite 2) an das Short Message Service Center 8 senden, welches die Nachrichten aufgrund des Kennungscodes an das SIM Service Center 10 weiterleitet. Eine solche Nachricht ist mit dem Buchstaben f in der Fig. 8 gekennzeichnet.

Ein Zyklus d, e, f kann sich je nach dem gewünschten besonderen Dienst und je nach dem angewählten Logikmodul 11.1 bis 11.n beliebige Male wiederholen. Das SIM Service Center 10 erhöht dabei mit jeder Nachricht den Synchronisationszähler pro Karte und bildet je Nachricht ein entsprechendes Kryptogramm, so dass die Chipkarte des Teilnehmers A die Authentizität der Daten prüfen kann. Die Rückantworten von der Chipkarte des Teilnehmers A an das SIM Service Center 10 sind vorzugsweise ebenfalls gemäss den vorstehenden Formeln verschlüsselt.

Die Reihenfolge der Blöcke 41, 42, 43 ist für die Erfindung nicht wesentlich und kann beliebig sein.

## Patentansprüche

1. Vorrichtung zur Übermittlung von Meldungen in einem Kommunikationsnetz zur Sprach- und Datenverarbeitung mit einer Vielzahl von Endgeräten (4, 9), welche einem bestimmten Benutzer zugeordnet sind, oder mittels einem in das Endgerät einsetzbaren Datenträger (22) einem bestimmten Benutzer zugeordnet werden können, wobei mindestens zwei Endgeräte (4, 9) miteinander in eine Sprach- oder Datenkommunikation treten können, sowie mit mindestens einer Zentrale (8) zum Steuern der Meldungsübermittlung innerhalb dem Kommunikationsnetz, wobei jede Meldungsübermittlung eine Datenkommunikation ist, bei welcher Datentelegramme (35, 39) ausgetauscht werden, in welchen ein standardisierter Datenvorsatz (36, 37) zum Feststellen der Identität des Teilnehmers und der Authentizität der Meldung enthalten ist, sowie mit mindestens einer im Kommunikationsnetz vorhandenen zentralen Einheit (10), wobei mindestens ein Teil der Endgeräte (4, 9) und die zentrale Einheit (10) Mittel zum Erzeugen des Datenvorsatzes (36, 37) der Datentelegramme (35, 39) aufweisen, wobei die Datentelegramme entweder von der zentralen Einheit (10) zu mindestens einem der Endgeräte (4, 9) oder von einem der Endgeräte zur zentralen Einheit übermittelt werden, wobei in der zentralen Einheit (10) und in dem genannten mindestens einen Teil der Endgeräte (4, 9) Einrichtungen zum Prüfen des Datenvorsatzes vorhanden sind, dadurch gekennzeichnet, dass die Datentelegramme einen vom jeweiligen Netzwerkbetreiber festlegbaren Kennungscode (40) enthalten, dass die zentrale Einheit (10) und der genannte mindestens eine Teil der Endgeräte Mittel zum Erzeugen des Kennungscodes (40) aufweisen und Filter (12.1, 12.2) zum Erkennen des Kennungscodes (40) umfassen, wobei der Kennungscode (40) eine vom jeweiligen Netzwerkbetreiber festlegbare Sicherheitseinrichtung für die Übermittlung bestimmter Meldungen ist, und im Datentelegramm unmittelbar anschliessend an den standardisierten Datenvorsatz enthalten ist.

2. Vorrichtung nach Anspruch 1, dadurch gekennzeichnet dass das Kommunikationsnetz ein digital arbeitendes Kommunikationsnetz, insbesondere ein zellular aufgebautes Mobilfunknetz (1) nach dem GSM- oder dem DCS1800-Standard ist.

3. Vorrichtung nach Anspruch 1 oder 2, dadurch gekennzeichnet, dass die den Endgeräten (4, 9) zugeordneten Filter (12.1, 12.2) je ein Softwaremodul aufweisen, das in einem Speichermittel (26), welches im Endgerät (4, 9) oder auf dem Datenträger (22) vorhanden ist, enthalten ist.

4. Vorrichtung nach einem der Ansprüche 1 bis 3, dadurch gekennzeichnet, dass mindestens ein Teil der Endgeräte Mobilfunktelefone (4) sind, die je eine Vorrichtung (21) zum Austauschen von Daten mit dem Datenträger, insbesondere mit einer in das Mobilfunktelefon einsetzbaren Chipkarte (22) umfassen.

5. Vorrichtung nach einem der Ansprüche 1 bis 4, dadurch gekennzeichnet, dass Datentelegramme (39), die den Kennungscode (40) enthalten, lediglich ein Teil einer Nachricht, bestehend aus mehreren Datentelegrammen (39) sind, wobei in jedem Datentelegramm im Kennungscode die Anzahl Datentelegramme für die vollständige Nachricht und eine Information für die Stellung eines entsprechenden Datentelegrammes innerhalb der Nachricht enthalten sind.

6. Vorrichtung nach Anspruch 5, dadurch gekennzeichnet, dass ein Kontrollmittel (32) vorhanden ist, das derart wirkt, dass jedes zu einer Nachricht gehörende Datentelegramm in einem Speichermittel (25, 26) gespeichert wird und dass die weitere Verarbeitung der Datentelegramme erst dann erfolgt, wenn die vollständige Nachricht im Speichermittel vorhanden ist.

7. Vorrichtung nach einem der Ansprüche 1 bis 6, dadurch gekennzeichnet, dass der zentralen Einheit (10) Module (14, 15) zum Verwalten von Berechtigungsdaten einzelner Teilnehmer, die zum Übermitteln von Meldungen (39) mit dem Kennungscode (40) berechtigt sind und zum Berechnen, Verschlüsseln und Kontrollieren von einem im Kennungscode (40) enthaltenen Sicherheitscode (43) zugeordnet sind.

8. Vorrichtung nach Anspruch 7, dadurch gekennzeichnet, dass in den Sicherheitscode (43) der Wert einer Zufallszahl (RAND) miteinbezogen ist, wobei die Zufallszahl selbst vorzugsweise eine durch den Betreiber des Kommunikationsnetzes definierter Funktion der Meldung ist.

9. Vorrichtung nach einem der Ansprüche 1 bis 8, dadurch gekennzeichnet, dass die mit dem Kennungscode (40) versehenen Datentelegramme (39) Bestandteile von besonderen Diensten, die vom Kommunikationsnetzbetreiber angeboten werden, sind.

10. Vorrichtung nach einem der Ansprüche 1 bis 9, dadurch gekennzeichnet, dass die mit dem Kennungscode (40) versehenen Datentelegramme (39) die Meldungsinformationen (44) in verschlüsselter Form enthalten.

## Claims

1. Device for transmitting messages in a communication network for voice and data processing having a plurality of terminals (4, 9) which are allocated to a specific user or can be allocated to a specific user by means of a data carrier (22) insertable in the terminal, at least two terminals (4, 9) being capable of entering into voice or data communication with one another, and having at least one centre (8) for controlling the message transmission within the communication network, each message transmission being a data communication wherein data telegrams (35, 39) are exchanged, containing a standardized data header (36, 37) for establishing the identity of the subscriber and the authenticity of the message, and having at least one central unit (10) present in the communication network, at least some of the terminals (4, 9) and the central unit (10) having means for generating the data header (36, 37) of the data telegrams (35, 39), the data telegrams being transmitted either from the central unit (10) to at least one of the terminals (4, 9) or from one of the terminals to the central unit (10), there being facilities for checking the data header (36, 37) in the central unit (10) and in said at least some of the terminals /(4, 9), characterized in that the data telegrams contain an identification code (40) definable by the respective network provider, that the central unit (10) and said at least some of the terminals (4, 9) have means for generating the identification code (40) and filters (12.1, 12.2) for recognizing the identification code (40), the identification code (40) being a security facility definable by the respective network provider for the transmission of certain messages and being contained in the data telegram immediately following the standardized data header.

2. Device according to claim 1, characterized in that the communication network is a digitally operating communication network, particularly a cellular mobile radio telephone network (1) according to the GSM or DCS 1800 standard.

3. Device according to claim 1 or 2, characterized in that each of the filters (12.1, 12.2) associated with the terminals (4, 9) has a software module contained in a storage means (26) in the terminal (4, 9) or on the data carrier (22).

4. Device according to one of the claims 1 to 3, characterized in that at least some of the terminals are mobile radio telephones (4), each comprising a device (21) for exchanging data with the data carrier, particularly with a chip card (22) insertable in the mobile radio telephone.

5. Device according to one of the claims 1 to 4, characterized in that data telegrams (39) containing the identification code (40) are merely part of a message comprising a plurality of data telegrams (39), the number of data telegrams for the complete message and information for the position of a respective data telegram within the message being contained in each data telegram in the identification code.

6. Device according to claim 5, characterized in that there is a checking means (32) which works in such a way that each data telegram belonging to a message is stored in the storage means (25, 26), and that the further processing of the data telegrams does not take place until the complete message is present in the storage means.

7. Device according to one of the claims 1 to 6, characterized in that modules (14, 15) for managing authorization data of individual subscribers authorized to transmit messages (39) having the identification code (40) and for calculating, encoding, and checking a security code (43) contained in the identification code (40) are associated with the central unit (10).

8. Device according to claim 7, characterized in that the value of a random number (RAND) is included in the security code (43), the random number itself being preferably a function of the message defined by the provider of the communication network.

9. Device according to one of the claims 1 to 8, characterized in that the data telegrams provided with the identification code (40) are components of special services offered by the communication network provider.

10. Device according to one of the claims 1 to 9, characterized in that the data telegrams (39) provided with the identification code (40) contain the message information (44) in encoded form.

## Revendications

1. Dispositif de transmission de messages dans un réseau de communications adapté au traitement de voix et de données et comprenant une pluralité de dispositifs terminaux (4, 9) attribués à des utilisateurs prédéterminés ou pouvant être attribués au moyen d'un support de données (22) insérable dans le dispositif terminal, deux dispositifs terminaux (4, 9) au moins pouvant établir entre eux une communication vocale ou de données, ainsi qu'au moins une centrale (8) permettant de contrôler la transmission de messages à l'intérieur dudit réseau de communication, chaque transmission de message constituant une communication de données au cours de laquelle des télégrammes de données (35, 39) sont échangés qui comprennent une en-tête standardisée (36, 37) permettant de déterminer l'identité de l'abonné et l'authenticité du message, ainsi que au moins une unité centrale (10) disponible dans le réseau de communication, au moins une partie des dispositifs terminaux (4, 9) et l'unité centrale (10) comprenant des moyens de génération de l'en-tête (36, 37) du télégramme de données (35, 39), les télégrammes de données étant transmis soit de l'unité centrale (10) à au moins un des dispositifs terminaux (4, 9), soit d'un des dispositifs terminaux à l'unité centrale, des dispositifs de vérification d'en-tête étant compris dans l'unité centrale (10) ainsi que dans ladite au moins une partie des dispositifs terminaux, caractérisé en ce que les télégrammes de donnée contiennent un code d'identification (40) définissable par l'exploitant de réseau, en ce que l'unité centrale (10) et ladite au moins une partie des dispositifs terminaux comprennent des moyens de génération du code d'identification (40) et des filtres (12.1, 12.2) de reconnaissance du code d'identfication (40), le code d'identification (40) constituant une sécurité déterminée par l'exploitant de réseau pour la transmission de messages particuliers et étant contenu dans le télégramme de données immédiatement après l'en-tête standardisée.

2. Dispositif selon la revendication 1, caractérisé en ce que le réseau de communication est un réseau de communication numérique, en particulier un réseau radio mobile (1) cellulaire selon le standard GSM ou DCS1800.

3. Dispositif selon la revendication 1 ou 2, caractérisé en ce que les filtres (12.1, 12.2) correspondant aux dispositifs terminaux (4, 9) comportent chacun un module de logiciel enregistré dans un moyen de mémoire (26) disponible dans le dispositif terminal (4, 9) ou sur le support de données (22).

4. Dispositif selon l'une des revendications 1 à 3, caractérisé en ce que au moins une partie des dispositifs terminaux sont des téléphones mobiles (4) munis d'un dispositif (21) d'échange de données avec le support de données, en particulier avec une carte à puce (22) insérable dans le téléphone mobile.

5. Dispositif selon l'une des revendications 1 à 4, caractérisé en ce que les télégrammes de données (39) qui contiennent le code d'identification (40) constituent seulement une partie d'une communication constituée de plusieurs télégrammes de données (39), le nombre de télégramme de données pour une communication complète ainsi qu'une information quant à la position du télégramme de données correspondant à l'intérieur de la communication étant contenus dans le code d'identification de chaque télégramme de données.

6. Dispositif selon la revendication 5, caractérisé en ce qu'un moyen de contrôle (32) est prévu qui agit en sorte que chaque télégramme de données appartenant à une communication soit mémorisé dans un moyen de mémoire (25, 26) et que le traitement ultérieur du télégramme de données se poursuit seulement lorsque la communication complète est disponible dans le moyen de mémoire.

7. Dispositif selon l'une des revendications 1 à 6, caractérisé en ce que l'unité centrale (10) gère des modules (14, 15) de gestion de données d'autorisation d'abonnés particuliers autorisés à transmettre des messages (39) avec le code d'identification (40) et de calcul, de codage et de contrôle d'un code de sécurité (43) contenu dans le code d'identification (40).

8. Dispositif selon la revendication 7, caractérisé en ce que la valeur d'un nombre aléatoire (RAND) est incluse dans le code de sécurité (43), le nombre aléatoire étant lui-même une fonction du message définie de préférence par l'exploitant de réseau.

9. Dispositif selon l'une des revendications 1 à 8, caractérisé en ce que les télégrammes de données (39) munis d'un code d'identification (40) constituent des éléments constitutifs de services particuliers proposés par l'exploitant du réseau de communication.

10. Dispositif selon l'une des revendications 1 à 9, caractérisé en ce que les télégrammes de données (39) munis du code d'identification (40) contiennent l'information de message (44) sous une forme codée.
